Europäisches Patentamt

(19) European Patent Office

Office européen des brevets

(11) Publication number: **0 251 672**
**A2**

# (12) EUROPEAN PATENT APPLICATION

(21) Application number: 87305610.5

(22) Date of filing: 24.06.87

(51) Int. Cl.⁴: **C09J 7/02**

(30) Priority: 25.06.86 GB 8615440

(43) Date of publication of application:
**07.01.88 Bulletin 88/01**

(84) Designated Contracting States:
**AT BE CH DE ES FR GB GR IT LI LU NL SE**

(71) Applicant: **The Wiggins Teape Group Limited**
**P.O. Box 88 Gateway House Basing View**
**Basingstoke Hampshire RG21 2EE(GB)**

(72) Inventor: **Bebbington, David John**
**24 Greenway Buckden**
**Huntingdon Cambridgeshire(GB)**

(74) Representative: **Roberts, Jonathan Winstanley**
**et al**
**The Wiggins Teape Group Limited Group**
**Patents Dept. Butler's Court**
**Beaconsfield Buckinghamshire HP9 1RT(GB)**

(54) **Pressure sensitive adhesive products.**

(57) Peelable sensitive adhesive coated substrates, (in particular labels) have a primer coat on the substrate comprising a contact cement and a peelable pressure sensitive adhesive coating containing a contact cement. The use of a contact cement as a primer and in the adhesive enhances cohesion of the adhesive coating and its adhesion to the substrate. This improves peelability particulartly by allowing separate optimisation of the adhesive as a peelable pressure sensitive adhesive.

EP 0 251 672 A2

# PRESSURE SENSITIVE ADHESIVE PRODUCTS

This invention relates to pressure sensitive adhesive products, particularly in the form of labels, in which the adhesive is a peelable pressure sensitive adhesive.

Pressure sensitive adhesives are adhesives which do not require specific activation in order to render them adhesive to the target substrate. Most commonly these adhesives are used in the form of coatings on a sheet material which can then be adhered without further activation to the target substrate. Typical examples include pressure sensitive adhesive tape and label materials. Because the pressure sensitive adhesive will form an adhesive bond to a substrate without activation, the adhesive coated material is normally protected from premature adhesion by being held in contact with a release surface. For pressure sensitive adhesive tapes based on polymeric films the release surface is usually the surface of the polymeric film remote from the adhesive coating thus enabling the tape to be conveniently stored in the form of a spirally wound roll. For other forms of pressure sensitive adhesive coated materials it is usual for the adhesive coated material to be adhered lightly to a separately provided release surface which is most commonly provided by a release coating typically of a silicone polymer on a backing substrate. Pressure sensitive adhesives are also sometimes referred to as "self-adhesives".

Pressure sensitive adhesive coated materials can be functionally divided into two broad classes. The first of these is represented by the so-called "permanent" materials in which the properties of the pressure sensitive adhesive are selected so as to form an adhesive bond with the target substrate which is strong and (apart from deterioration) does not weaken significantly with time. Most forms of pressure sensitive adhesive tape and many varieties of pressure sensitive adhesive labels are "permanent" in this sense. The second broad class is of "removable" or "peelable" pressure sensitive adhesive coated materials in which the pressure sensitive adhesive forms an adhesive bond of functionally adequate strength with the target substrate but which, after an extended period of adhesion typically from days to months, can be peeled away from the target substrate, ideally, without damaging the substrate and without leaving pressure sensitive adhesive on the target substrate or with the adhesive coated material itself tearing. The present invention relates to this second broad class of pressure sensitive adhesive coated materials.

The term "removable" and "peelable" are used in the art as being substantially synonymous but for convenience and because it is suitably descriptive, the term "peelable" will be used herein. It will be appreciated that these terms do not relate to the removal of pressure sensitive adhesive coated materials from specific release surfaces because this is determined by the designed release properties of the release surface rather than the adhesive properties of the pressure sensitive adhesive. To be peelable a pressure sensitive adhesive coated material requires a combination of properties. The pressure sensitive adhesive must form a bond of adequate strength with the target substrate but one in which the bond does not subsequently either dramatically weaken, in which case the adhesive coated material might fall away from the the target substrate, or significantly increase in strength as this would tend to limit peelability. From this it is clear that the adhesive should have adequate cohesive strength so as to minimise any tendency of the adhesive film itself to rupture and should bond strongly to the substrate onto which the adhesive is coated. It is plain that, at least in part, these requirements are in conflict. In particular the formation of a strong bond between the pressure sensitive adhesive and its coating substrate and a relatively much weaker bond between the adhesive and the target substrate are in conflict. Many of the "peelable" pressure sensitive adhesive coated products currently on the market do not fully resolve this technical conflict and are, effectively, only less permanent than typical "permanent" pressure sensitive adhesive coated materials.

One approach to overcoming this difficulty has been to modify the surface of the coating substrate prior to coating so as to encourage a stronger bond with the pressure sensitive adhesive. One approach to this uses a keycoat including particulate matter such as starch, on the coating substrate so as to make the surface of the coating substrate more rough and provide a better key for the pressure sensitive adhesive on coating it. This approach has had some success where the adhesive is coated directly onto the coating substrate in the form of a solution in a relatively volatile organic solvent. The keycoat enhances contact of the solution of pressure sensitive adhesive with the coating substrate and may assist in the adhesive solution penetrating the substrate so as to form a strong bond. However, solvent coating techniques require specialised plant adapted to handle volatile and usually flammable solvent and such plant tends to be relatively small and run relatively slowly. These requirements impair the production efficiency and make solvent coated materials expensive.

The present invention provides a peelable pressure sensitive adhesive coated substrate comprising a sheet substrate having on one surface thereof a primer coating firmly bonded to the sheet substrate, which includes a contact cement, and, overlying the primer coating, a coating of a peelable pressure sensitive adhesive including a contact cement, the contact cement(s) serving to firmly bond the primer coating and the adhesive coating together.

The invention is particularly applicable to labels in which the substrate is a flexible sheet material and, as an industrial product, will normally be held, prior to use, on a backing sheet having a release surface. Accordingly, the invention includes a peelable pressure sensitive adhesive coated label, as converted labelling or unconverted label stock, comprising a backing substrate having a release surface and releasably laminated thereto the pressure sensitive adhesive coated side of a peelable pressure sensitive adhesive label which comprises a flexible sheet label substrate and on one side thereof a primer coating, firmly bonded to the sheet substrate, which includes a contact cement and overlying the primer coating a coating of a peelable pressure sensitive adhesive including a contact cement, the contact cement serving to firmly bond the primer coating and the adhesive coating together.

The invention further includes the peelable pressure sensitive adhesive coated sheet substrate of the invention, particularly in the form of a label, in use, peelably adhered to a target substrate.

The peelable pressure sensitive adhesive coated sheet product of the invention is in structure and composition substantially conventional in the art of peelable pressure sensitive adhesive coated products except in the provision of a primer coating containing a contact cement and the inclusion of a contact cement in the pressure sensitive adhesive. Contact cements are a class of adhesives which function by exploiting the properties of certain polymers which exhibit high cohesive strength and a ready tendency for two surfaces of the polymer to cohere when placed in contact. Examples include the commercially available "impact" adhesives and so-called "self-seal" coatings as are now common on envelopes. Examples of polymers exhibiting these properties and which are thus suitable for use as contact cements include polymers of isoprene, including natural rubber (unvulcanized), synthetic cis-polyisoprene and polychloroprene, and a class of acrylic polymers. A property common to polymers which can be used in contact cements is a low glass transition temperature. We have successfully used both types of polymers referred to above as the contact cement in the invention. We believe that the limits on the nature of the contact cement are provided by process requirements, which are discussed below, compatibility of the contact cement with the pressure sensitive adhesive, adherence of the primer to the coating substrate and effectiveness of the polymers used in their function as contact cement in the product. The requirement of compatibility is effectively that on coating, the pressure sensitive adhesive composition including the contact cement shall not undergo phase separation. Whilst we can see this as a theoretical problem, we have not experienced any serious difficulty in this regard and would not expect this to be a difficulty for others skilled in this art. Adherence of the primer coating to the coating substrate is referred to below. Isoprene polymers are generally superior as contact cements in the invention to the acrylic polymers referred to above. Polychloroprene, such as that sold under the trade mark Neoprene by Du Pont, is particularly good. Unvulcanized natural rubber is technically good but is susceptible to oxidation and in practice it will probably be necessary to include an antioxidant in it. Within the invention, provided the functional requirements are met, the contact cement used in the primer coating can be the same as or different to that used in the pressure sensitive adhesive coating.

The primer coat on the coating substrate can be substantially entirely of the contact cement polymer. However, we have found that diluent polymers can be included in the primer coat which may improve the performance of the primer coat. Any such diluent polymer should be a film former and should not interfere significantly either with the bonding of the primer coat to the coating substrate or with the desired properties of the contact cement polymer. Apart from beneficial economic effects, the inclusion of a diluent polymer can assist in filling the surface of the coating substrate, if this is rough for example as it will be with paper, it may aid in forming a barrier, which can be important if the adhesive coating contained materials which may migrate, it may act to improve the bonding of the primer coat to the coating substrate and may provide beneficial mechanical properties in the primer coat. We have successfully used a styrene butadiene rubber (SBR) as a diluent in the primer coat. The SBR used is preferably a relatively "soft" SBR polymer i.e. one including a relatively high proportion of butadiene typically between 50 and 80%, especially around 70% of butadiene by weight. Even higher proportions of butadiene may be used, although we have not found any particular advantage in this. The particular proportion chosen will typically represent a balance between ensuring that the SBR is flexible enough so as to conform with the coating substrate in use and have a high enough styrene content so as to enhance bonding to the coating substrate. We have successfully used carboxylated styrene butadiene rubbers as such diluents, the carboxylation being present primarily because the source material is an SBR latex. (See below in the discussion on the process.) As the contact cements typically include diene polymers we have found it beneficial to include small quantities, typically up to 1.0% and most usually from 0.3% to 0.6% by weight on the total dry polymer weight of the primer coat, of an antioxidant. The main reason for this is to inhibit discolouration which may otherwise occur. The inclusion of an antioxidant may also have a beneficial effect on performance e.g. after long term storage, although we have yet to observe this. Antioxidants known for use with the polymer types used as contact cements, especially for the polydiene polymers will be chosen. Small quantities of filler may be included within the primer coat if desired but incorporation of more than about 5.0% is likely to have a deleterious effect on the desired properties.

The primer coat will typically be present on the coating substrate in an amount from 2 to 20 and more commonly from 5 to 10 g m$^{-2}$. The lower limit is determined by the requirement to ensure complete coverage of the coating substrate with a good coating pattern and the upper limit is primarily determined by cost as there appears to be no significant benefit in increasing the coatweight beyond the limit indicated.

We have sucessfully used conventional peelable pressure sensitive adhesive materials to serve this function in the product of the present invention. So far as the pressure sensitive adhesive component is concerned the properties which contribute to peelability are principally limited tack, a low build factor and a relatively soft adhesive. These properties can be achieved conventionally by omitting or only using a low level of tackifier, including tack deadeners such as waxes and by including plasticisers. The chemistry of the polymer also has an effect but, apart from selection among polymers which are commercially available, the chemistry is controlled primarily by the manufacturer of the polymer rather than the adhesive formulator. Chemically, peelable adhesive polymers are available based on acrylic polymers, styrene butadiene rubbers and isoprene polymers. Typical acrylic peelable adhesives include a high proportion of alkyl e.g. butyl or 2-ethylhexyl, acrylate monomer units. Styrene butadiene rubbers will typically have a relatively high proportion of butadiene, so that they are relatively soft, typically greater than 60% by weight butadiene but not usually more than 80% as polymers with such low proportions of styrene tend to behave more like polybutadiene which is very soft and not itself a pressure sensitive adhesive. Styrene butadiene rubbers can be carboxylated or uncarboxylated types. The choice between these will primarily be determined by the coating method used. Thus, for aqueous coatings, carboxylated styrene butadiene rubbers, as latices, will be preferred. Isoprene polymers for example unvulcanized natural rubber and polychloroprene can be formulated into pressure sensitive adhesives by incorporating tackifiers with them. For these polymers tackifiers are needed as the polymers do not themselves form pressure sensitive adhesive films. Where the polymer is an isoprene polymer then part of this polymer may function as the contact cement present in the peelable pressure sensitive adhesive coating and, therefore, it may not be necessary to add a separate contact cement component.

When present, tackifiers for the peelable pressure sensitive adhesive will typically be rosin esters where the main polymer is an acrylic polymer or a styrene butadiene rubber or a hydrocarbon resin where the main polymer is a polyisoprene or a styrene butadiene rubber. For acrylic polymers and styrene butadiene rubber tackifiers may not be necessary but for polyisoprene polymers such as natural rubber they will be present in at least 5% by weight on the solid weight of adhesive. The amount of tackifier used will be selected to give sufficient tack for the desired properties of the adhesive but not significabntly more, as increasing the tack beyond this level will tend to make the adhesive less peelable. Use of more than about 25% by weight on the total adhesive of tackifier will usually and more than 50% will almost invariably lead to the adhesive being non-peelable and, when used, typical amounts of plasticizer will be from 5 to 10% by weight on the solid adhesive.

Plasticizers may be incorporated in the peelable pressure sensitive adhesive coating to soften the adhesive and thus improve peelability. However, care may be needed as some plasticisers can have a tackifying effect on adhesive polymers and this may limit the amount used. Typical plasticizers include phthalate esters and polyoxyakylene ether derivatives of phenols, the principal requirement being compatibility with the main adhesive polymer and the tackifier so as to avoid or minimise migration of the plasticizer. It is possible to use quite large quantities of plasticizer even up to 50% by weight on the solid adhesive. However, more usually, when plasticizers are present they will be used in an amount of from 10 to 20% by weight on the solid adhesive.

The chemical nature of the contact cement included in the adhesive layer has been mentioned above. When the contact cement component is added to the adhesive it will typically be present in at least 5% by weight of the solid adhesive as less than 5% has proved ineffective and usually the minimum amount will be about 7%. Typically the proportion will be from 10 to 20% by weight on the solid adhesive but higher amounts for example up to 50% work. However, as the best contact cement we have found is polychloroprene which is more expensive than the other polymers used there is an economic incentive to limit the amount used to that necessary to achieve the purpose. As is briefly noted above, where the main polymer of the adhesive is an isoprene polymer then the proportion of this polymer may represent the proportion of contact cement as that part of it adjacent to the primer coat will provide this function.

The amount of peelable pressure sensitive adhesive coated on the substrate will typically be in the range of 10 to 25 g m$^{-2}$. Trying to use less adhesive will make it difficult to achieve adequate adhesive performance and uniform coating. Use of larger amounts of adhesive tends to lead to a relatively strong bond between the adhesive and the target substrate in use, thus making the product less peelable. Generally we find that lower coatweights make peelability of the product in use easier to achieve but make provision of a uniform coating more difficult to achieve. We expect that the coatweight will be at least 12 g m$^{-2}$ and most usually between 14 and 20 g m$^{-2}$ depending on the nature of the adhesive.

The nature of the coating substrate will be determined by the intended end use. Typically it will be a sheet of paper, polymeric film, foil or similar material. Usually it will have a substance (mass per unit area of sheet) of at least 50 g m$^{-2}$, although for paper it will typically be at least 70 g m$^{-2}$, as lower substances will make it difficult to provide the necessary strength to enable it to be peeled from the target substrate. There is no specific functional upper limit of substance for the coating substrate but paper would not usually have a substance greater than 100 g m$^{-2}$ and films and foils probably not more than about 150 g m$^{-2}$ on a cost basis although where "fancy" sheets of pressure sensitive adhesive material are being produced the effective substance can be higher.

Where a separate backing substrate having a release surface is included in the product the backing substrate itself will typically be of paper, polymeric film, foil, polymer coated paper or similar material. The presence of this backing substrate is determined essentially by its function and this will determine its substance, but typically it will be from 60 to 100 g m$^{-2}$. Lower substances tend not to be strong enough and higher substances relatively expensive. The release surface will normally, as is conventional in the art, be provided by a coating of a silicone polymer or a material providing similar release properties coated on the backing substrate. However, where the backing substrate is of a relatively hard polymeric film having a gloss surface it may not be necessary to provide a separate release coating to achieve adequate release. Where a coating of a silicone polymer is used to achieve the release surface its coatweight will typically be from 0.5 to 10 g m$^{-2}$ but usually not more than 2 g m$^{-2}$. Backing substrates having release surfaces such as are commonly used in the art may be used in the present invention.

The product of the invention can be made by conventional adhesive coating methods. Because of the ease of operation at high speed provided by using aqueous coating mixes, we have used this method sucessfully to coat both the primer coating and the peelable pressure sensitive adhesive coating in making products of this invention.

To coat the primer coating onto the coating substrate an aqueous coating mix is made up in which the components of the primer coating are finely dispersed and which typically takes the form of a latex. Process aids such as defoamers and wetting aids may be added and the overall solids content adjusted, if necessary by adding further water, so as to achieve a satisfactory viscosity for coating, the coating mixes coated onto the substrate and dried to provide the primer coating. Thereafter the adhesive coating is coated onto the primed substrate either, in a similar fashion, by coating it directly with the aqueous adhesive coating mix or indirectly by coating the aqueous adhesive mix onto a release surface, drying it on that surface and subsequently laminating the adhesive layer with the primed substrate. As will be recognised the release surface will usually be the release surface of the backing sheet when this is present.

In aqueous coating, the drying and thus film formation of the coating is achieved by removing water typically using heated driers. Frequently the capacity of the driers effectively limits the line speed of the coater and there is a process and economic incentive to minimise the amount of water in the coating mix. The extent to which this can be done plainly depends upon the coating performance of the mix and especially its viscosity. Typically we have worked successfully at around 53% solids but see no difficulty in principle in going at least as high as 60% solids. This is in line with general experience in this art where commonly solid contents are in the range 40 to 60% by weight on the coating mix and experimentally up to 70%. Defoamers will usually be used because the polymers are present as dispersions or latices in water and the generally hydrophobic nature of the polymers means that substantial amounts of surfactants are necessary in order to maintain the stability of the dispersions. In the absence of defoamer the surfactant may lead to excessive foaming during coating. Conventional defoamers such as mineral oils and waxes or silicones can be used typically in an amount of about 0.25% by weight on the wet coating mix. Wetting aids can be useful in achieving uniform coating especially of low viscosity coating mixes. Plainly a substrate which has poor wettability will encourage the use of wetting aids. As is mentioned above the adhesive

5

coating mix may be indirectly coated by first coating it on to a release surface. Typically such release surfaces are markedly hydrophobic and wetting aids may be very useful in optimizing coater performance. Typically wetting aids are alkyl succinates and will be used in an amount of up to 1% commonly about 5% by weight of the wet coating mix. We have successfully run without using any wetting aids at all.

In using aqueous coating technology, where the polymer being coated is a styrene butadiene rubber, it is common practice to use a carboxylated styrene butadiene rubber in order to enhance its mechanical stability in water for coating. Thus generally, where styrene butadiene rubbers are used in the present invention where they are applied by an aqueous coating technique they will usually be carboxylated styrene butadiene rubbers.

In making up the coating mix for the peelable pressure sensitive adhesive and where a plasticizer is used we have found it advantageous to make up the mix by first mixing the dispersion or latex of the contact cement e.g. chloroprene latex, with the plasticizer, which is usually supplied as a liquid. This incorporates the plasticizer into the contact cement before adding the main adhesive polymer. This procedure appears to reduce any tendency of the plasticizer to undergo undesirable migration in the finished product.

When polymer latices are formulated into coating mixes it is well known that the particular details of the formulation process can affect the mix properties, especially viscosity and emulsion stability. We expect that such effects may occur in making up mixes for use in this invention but can be avoided by changing the order of addition of components etc., as is known in the art.

The mechanics of the particular coating method are not critical to the invention. Thus conventional Meyer bar, reverse roll, reverse gravure, air knife and blade coating methods can be used as desired.

The invention includes various methods of making the adhesive coated sheet product of the invention. Accordingly, the invention provides a method of making a peelable pressure sensitive adhesive coated sheet product which method comprises coating a substrate with a first aqueous coating mix including dispersed therein a contact cement, removing water from the coating so as to provide a primer coat on the substrate and subsequently coating the primed substrate with a peelable pressure sensitive adhesive compositon including a contact cement.

The invention further includes a method of making a peelable pressure sensitive adhesive coated label laminated to the release surface of a backing substrate which comprises applying a first aqueous coating mix having dispersed therein a contact cement material to one side of the label substrate, removing water from the coating so as to form a primer coating on the label substrate, coating the release surface of the backing substrate with an aqueous coating mix comprising a dispersion of a peelable pressure sensitive adhesive including therein a contact cement, removing water from the coating on the backing substrate so as to form a coating of a peelable pressure sensitive adhesive on the backing substrate and subsequently laminating the primer coating face of the label substrate to the adhesive coated face of the backing substrate.

The products of the invention may also be made by other coating technologies but some modification of the materials may be required to adapt them to those technologies. Although it is not particularly preferred, it is possible to coat one of the coatings by one technology and the other by another technology but this would require offline coating whereas using a single coating technology will enable in-line coating which generally has enhanced production efficiency.

The following Examples illustrate the invention. All parts and percentages are by weight unless otherwise stated.

Test Methods

Peel Strength Test

A sample of pressure sensitive adhesive coated sheet substrate 1 inch (2.54 cm) wide and about 4 inches (ca. 10 cm) long is adhered to a target substrate (glass unless otherwise stated) surface. One end of the adhesive coated sheet is peeled off the target substrate and held in a plane perpendicular to the target substrate. The target substrate is restrained in its initial plane. The coated sheet is pulled away from the target substrate at a constant linear rate of 300 mm min$^{-1}$ and so that the angle at which the coated sheet is peeled from the target substrate is held at 90°. The force needed to peel the coated sheet from the target substrate is measured. The instrument used provides a numerical readout which is the numerical result quoted below. Nominally this readout has the dimensions: grams force per linear inch (1 gf in$^{-1}$ = ca.0.39 Nm$^{-1}$). The behaviour of the test sample and the adhesive coating during peeling and the state of the test sample and the target substrate after peeling are also noted. In particular, the amount, if any, of adhesive transferred to the target substrate, expressed as a percentage of the area of the target substrate covered by transferred adhesive, is noted. A phenomenon, believed to represent a stage short of adhesive transfer is where, during peeling, the adhesive temporarily remains adherent to the target substrate on the open side of the line of peel. In this the adhesive gives the appearance of strings or legs which are pulled away from the target substrate after a short delay. This is known colloquially in the art as "legging". The test is usually carried out in duplicate and unless otherwise stated quoted results are the means of such duplicates. The test is repeated with a number of samples varying the time that the test samples are adhered to the target substrate. In our testing we have used intervals from a few seconds to one month. This is intended to show up any changes, especially resulting in build up of the bond strength between adhesive and target substrate, with time including ageing effects. In the tables of results below the symbols in brackets after the numerical data have the following meanings:

| Numerical value | % adhesive transfer |
|---|---|
| A | small amount of adhesive transfer (less than 5%) |
| L | "Legging" observed |
| SL | slight "legging" observed |

7

Materials Used in Examples

| Trade Name | Source | Description |
|---|---|---|
| Neoprene 115 | Du Pont | Polychloroprene latex (50% solids) |
| Revertex 'S' | Doverstrand | Stabilized natural rubber latex (70% solids) |
| Poly Bd 115 | Enichem | Polybutadiene latex (25% solids) |
| EL 7704 | Doverstrand | Carboxylated SBR latex |
| 76 D 40 | Doverstrand | Carboxylated SBR latex |
| 76 D 41 | Doverstrand | Carboxylated SBR lates |
| XA 83352 | Doverstrand | Carboxylated SBR latex |

(see table below for further data on SBR latices)

| | | |
|---|---|---|
| Coltac R2 | Allied Colloids | Acrylic polymer latex (50% solids) |
| Acronal DS 3342 | BASF | Acrylic polymer latex (50% solids) |
| Intadex SE 2292 | Industrial Adhesives Ltd. | Acrylic polymer latex (58% solids) |
| DBP | – | Commercial dibutyl phthalate plasticizer (liquid) |
| Plastilit 3060 | BASF | Polypropylene glycol alkylphenyl ether plasticizer |
| NE 31 | Neptune Chemicals | Wax emulsion tack deadener |

8

## Properties of SBR Latices

| Trade Name | Solids % | Butadiene % |
|---|---|---|
| EL 7704 | 54 | 75 |
| 76 D 40* | 47 | 70 |
| 76 D 41* | 47 | 70 |
| XA 83352 | 41 | - |

*Same polymer but latices use different stabilizing systems

### General procedure used in Examples

The primer coating mix was applied to label grade paper as the coating substrate and dried to form the primer coating. The peelable pressure sensitive adhesive coating mix was applied to a paper backing substrate having a cured silicone release surface and then dried. The primed coating substrate and the adhesive coated backing substrate were laminated to give the product. The product was converted e.g. by die cutting to give labels or cutting to give test strips. In Example 1 to 11, 13 and 14 the coatings were produced on a laboratory coater and in Example 12 on pilot plant coating equipment.

Compositions of Primer Coat Coating Mixes

(percentages are % wt of dry polymer unless otherwise stated)

Designation                          Composition


P1                          Neoprene 115 latex


P2              Blends of Neoprene 115 and 76 D 40
                P2i         90%              10%
                P2i         70%              30%
                P2iii       50%              50%
                P2iv        30%              70%
                P2v         10%              90%
                P2(c)        0              100% (control)


P3              Revertex 'S' latex


P4              Blend of equal (dry) weights of Neoprene
                115 and Revertex 'S'


P5              Blends of Neoprene 115 and XA 83352
                P5i         90%              10%
                P5ii        70%              30%
                P5iii       50%              50%
                P5iv        30%              70%
                P5v         10%              90%


P6              Neoprene 115     65.5% wet     73.35% dry
                XA 83352         29.3% wet     26.2 % dry
                Water             4.9% wet

## Compositions of Adhesive Coating Mixes

(parts and percentages are by wt. of dry polymer unless otherwise stated)

| Designation | | Composition | |
|---|---|---|---|
| | | Main Adhesive Polymer | Contact Cement |
| A1 | | Blends of EL7704 and | Neoprene 115 |
| | A1i | 90% | 10% |
| | A1ii | 80% | 20% |
| | A1iii | 70% | 30% |
| | A1iv | 60% | 40% |
| | A1v | 50% | 50% |
| | A1c | 100% | 0 (control) |
| A2 | | Blends of Coltac R2 and Neoprene 115 | |
| | A2i | 90% | 10% |
| | A2ii | 80% | 20% |
| | A2iii | 70% | 30% |
| | A2iv | 60% | 40% |
| | A2v | 50% | 50% |
| A3 | | Blends of EL7704 and Revertex 'S' | |
| | A3i | 90% | 10% |
| | A3ii | 80% | 20% |
| | A3iii | 70% | 30% |
| | A3iv | 60% | 40% |
| | A3v | 50% | 50% |
| A4 | Mix A1v with added DBP (Parts per hundred parts A1v) | | |
| | A4i | 2.5 | |
| | A4ii | 5.0 | |
| | A4iii | 7.5 | |
| | A4iv | 10.0 | |

| Designation | | Composition | | |
|---|---|---|---|---|
| | | Main Adhesive Polymer | Contact Cement | |
| A5 | | Blends of SE 2292 and | Neoprene 115 | |
| | A5i | 50% | 50% | |
| | A5ii | 60% | 40% | |
| | A5iii | 70% | 30% | |
| | A5iv | 80% | 20% | |
| | A5v | 90% | 10% | |
| | A5(c) | 100% | 0 (control) | |

| | | Blends of Acronal, | Plastilit, | Neoprene | and Revertex |
|---|---|---|---|---|---|
| A6 | | DS 3342 | 3060 | 115 | 'S' |
| | A6i | 90 parts | 15 parts | 10 parts | 0 |
| | A6ii | 90 parts | 20 parts | 10 parts | 0 |
| | A6iii | 80 parts | 15 parts | 10 parts | 7 parts |
| | A6iv | 70 parts | 15 parts | 10 parts | 14 parts |

| | | Blends of Intadex, | Poly Bd, | Neoprene, | NE 31 |
|---|---|---|---|---|---|
| A7 | | SG 2292 | 115 | 115 | |
| | A7i | 80 parts | 0 | 10 parts | 10 parts |
| | A7ii | 70 parts | 10 parts | 10 parts | 0 |
| | A7iii | 80 parts | 20 parts | 10 parts | 0 |
| | A7iv | 70 parts | 0 | 10 parts | 20 parts |

| | | Blends of Acronal, | Plastilit, and | Neoprene |
|---|---|---|---|---|
| A8 | | DS 3342 | 3060 | 115 |
| | A8i* | 90 parts | 20 parts | 10 parts |
| | A8ii | 80 parts | 20 parts | 20 parts |
| | A8iii | 70 parts | 20 parts | 30 parts |
| | (*same as Mix A6ii) | | | |

Designation                      Composition

| Designation | | Composition | |
|---|---|---|---|
| A9 | Neoprene 115 | 7.66% wet | 7.12% dry |
| | Plastilit 3060 | 15.33% wet | 28.47% dry |
| | Acronal DS 3342 | 68.98% wet | 64.05% dry |
| | Water | 7.66% wet | - |
| | $NH_4OH$ | 0.17% wet | - |
| | Drewplus W4510 | 0.2 % wet | 0.37% dry |

(A9 is a more fully formulated version of A6ii for use on pilot plant. "Wet% is %(wet) on wet mix).

| A10 | Blends of 60 parts Acronal DS 3342 |
|---|---|
| | 20 parts Plastilit 3030 |
| | 40 parts Neoprene 115 |

Example 1

P1 was used as the primer coat to give a coatweight of ca. 6 g m$^{-2}$ and A1i to v and A1c (as a control) were used as the adhesive. A further control was made using Alc as the adhesive and unprimed label paper. The results of peel testing on a pvc sheet target substrate are set out in Table 1 below. From Table 1 the beneficial effect of the inclusion of the contact cement on peelability is apparent especially where the adhesive included relatively high amounts of contact cement.

Example 2

P1 was used as the primer coat as in Example 1. A2i to v were used as the adhesive. Peel results on a pvc sheet target substrate are set out in Table 2 below. These results also show improved peelability with increased proportion of contact cement.

Example 3

P2i to v and P2c (as a control) were used as the primer coat and A2v as the adhesive. This Example illustrates the incorporation of a styrene butadiene rubber in the primer. An internal control using primer P1 was also included. Peel test results are set out in Table 3 below.

Example 4

P3 was used as the primer and A3i to v as the adhesive. Peel test results are set out in Table 4 below.

### Example 5

P1 was used as the primer and A4i to iv as the adhesive. A1v as adhesive was used as internal control. Peel test results are set out in Table 5 below.

### Example 6

P1 was used as the primer and A5i to v and A5(c) as the adhesive. Peel test results are set out in Table 6 below.

### Example 7

P1 was used as the primer and A5v as the adhesive at various coatweights of adhesive. Peel tests on glass and PVC target substrates were carried out and the results are set out in Tables 7a and 7b respectively below.

### Example 8

P1 and P4 were used as the primer and A6i to iv as the adhesive. Peel test results are set out in Table 8 below.

### Example 9

P1 was used as the primer and A7i to iv as the adhesive. Peel test results are set out in Table 9 below.

### Example 10

P1 was used as the primer and A8i to iii as the adhesive. Peel test results are set out in Table 10 below.

### Example 11

P5i to v and P1 as internal control were used as primers and A8i as the adhesive. Peel test results are set out in Table 11 below.

### Example 12

Using a pilot plant coating equipment and P6 as the primer and A9 as the adhesive, product was coated and laminated. The adhesive coatweight was 19.3 g m$^{-2}$. Peel test results on a variety of target substrates are set out in Table 12 below.

### Example 13

P7 and P5ii were used as primers (to compare the effect of including 76 D 41 in P7 as compared with XA 83352 in P5ii) and A6ii as the adhesive. Peel test results on pvc and stainless steel target substrates are set out in Table 13 below.

## Example 14

P7 was used as the primer and A10 as the adhesive. Peel test results on a variety of target substrates are set out in Table 14 below.

## Example 14

## Table 1

| Primer | Adhesive | Peel test readings after | | | | |
|--------|----------|----------|--------|--------|--------|---------|
| | | 1 minute | 1 hour | 1 day | 1 week | 1 month |
| P1 | A1i | 230 | 340(A) | 450(A) | 450(A) | 440(A) |
| P1 | A1ii | 280 | 345 | 400(A) | 505(A) | 485(A) |
| P1 | A1iii | 280 | 320 | 360(A) | 590(A) | 625(A) |
| P1 | A1iv | 210 | 330 | 435 | 595 | 675 |
| P1 | A1v | 300 | 450(SL) | 580 | 685 | 790 |
| P1 | A1c | 270 | 320 | 390(5) | 445(10) | 500(10) |
| None | A1c | 350(10) | 380(70) | 430(95) | 505(30) | 425(100) |

## Table 2

| Primer | Adhesive | Peel test readings after | | | | |
|--------|----------|----------|--------|--------|--------|---------|
| | | 1 minute | 1 hour | 1 day | 1 week | 1 month |
| P1 | A2i | 695(A) | 810(85) | 1070(85) | 1110(15) | 510 |
| P1 | A2ii | 735(L) | 800(50) | 985(77) | 980(7) | 420(A) |
| P1 | A2iii | 725(A) | 865 | 910(SL) | 825(L) | 380(L) |
| P1 | A2iv | 630(L) | 845(SL) | 1040(SL) | 795 | 390(SL) |
| P1 | A2v | 580 | 640 | 800 | 620 | 325 |

## Table 3

| Primer | Adhesive | Peel test readings after | | | | |
|--------|----------|----------|--------|--------|--------|---------|
| | | 1 minute | 1 hour | 1 day | 1 week | 1 month |
| P1 | A2v | 545 | 630(SL) | 690 | 560 | 455 |
| P2i | A2v | 570(SL) | 550 | 650(SL) | 525 | 490 |
| P2ii | A2v | 635(SL) | 445 | 640(SL) | 525 | 450 |
| P2iii | A2v | 650(L) | 435 | 735 | 625(SL) | 475 |
| P2iv | A2v | 730(IO) | 510 | 810(L) | 610(L) | 470 |
| P2v | A2v | 785(5) | 550 | 835(L) | 540(SL) | 425 |
| P2c | A2v | 600(L) | 485 | 710(5) | 575(L) | 480 |

## Table 4

| Primer | Adhesive | Peel test reading after | | | | |
|---|---|---|---|---|---|---|
| | | 1 minute | 1 hour | 1 day | 1 week | 1 month |
| P3 | A3i | 565(A) | 715(10) | 615(10) | 650(10) | 525 |
| P3 | A3ii | 530 | 595 | 600 | 765 | 530 |
| P3 | A3iii | 575 | 800 | 1090(L) | 1005(L) | 625 |
| P3 | A3iv | 535 | 795 | 910(L) | 860(L) | 735 |
| P3 | A3v | 440 | 690 | 680 | 760 | 855 |

## Table 5

| Primer | Adhesive | Peel test readings after | | | | |
|---|---|---|---|---|---|---|
| | | 1 minute | 1 hour | 1 day | 1 week | 1 month |
| P1 | A1v | 350 | 600(A) | 695 | 650 | 765 |
| P1 | A4i | 265 | 595 | 600 | 610 | 715 |
| P1 | A4ii | 260 | 400 | 495 | 665 | 710 |
| P1 | A4iii | 280 | 490 | 600 | 650 | 790 |
| P1 | A4iv | 260 | 465 | 475 | 650 | 790 |

## Table 6

| Primer | Adhesive | Peel test readings after | | | | |
|---|---|---|---|---|---|---|
| | | 1 minute | 1 hour | 1 day | 1 week | 1 month |
| P1 | A5i | 625 | 650 | 415 | 545 | 440 |
| P1 | A5ii | 600 | 540 | 740 | 685 | 665 |
| P1 | A5iii | 495 | 480 | 780 | 655 | 605 |
| P1 | A5iv | 550 | 460 | 645 | 560 | 555 |
| P1 | A5v | 470 | 510 | 570 | 580 | 515 |
| P1 | A5(c) | 410(SL) | 520(L) | 585(5) | 650(SL) | 530 |

## Table 7a - Glass target substrate

| Coatweight g $m^{-2}$ | Peel test reading after | | | | |
|---|---|---|---|---|---|
| | 1 minute | 1 hour | 1 day | 1 week | 1 month |
| 22 | 240 | 405 | 425 | 485 | 475 |
| 20.4 | 235 | 315 | 380 | 460 | 400 |
| 18.0 | 218 | 313 | 400 | 405 | 360 |
| 16.0 | 175 | 285 | 320 | 375 | 330 |
| 13.2 | 230 | 310 | 410 | 410 | 440 |
| 11.2 | 155 | 220 | 290 | 285 | 305 |

## Table 7b - PVC target substrate

| Coatweight g $m^{-2}$ | Peel test readings after | | | | |
|---|---|---|---|---|---|
| | 1 minute | 1 hour | 1 day | 1 week | 1 month |
| 22 | 490 | 580 | 655 | 565 | 465 |
| 20.4 | 500 | 600 | 630 | 565 | 560 |
| 18.0 | 475 | 530 | 540 | 505 | 525 |
| 16.0 | 445 | 445 | 480 | 395 | 465 |
| 13.2 | 420 | 450 | 610 | 485 | 470 |
| 11.2 | 375 | 430 | 405 | 380 | 375 |

## Table 8

| Primer | Adhesive | Peel test readings after | | | | |
|---|---|---|---|---|---|---|
| | | 1 minute | 1 hour | 1 day | 1 week | 1 month |
| P1 | A6i | 629(95) | 395 | 440 | 350 | 345 |
| P1 | A6ii | 430(90) | 330 | 285 | 270 | 370 |
| P4 | A6iii | 575(20) | 375 | 350 | 265 | 325 |
| P4 | A6iv | 575(L) | 365 | 300 | 240 | 340 |

Table 9

| Primer | Adhesive | Peel test readings after | | | | |
|--------|----------|----------|--------|--------|--------|---------|
| | | 1 minute | 1 hour | 1 day | 1 week | 1 month |
| P1 | A7i | 410 | 475 | 575 | 660 | 635 |
| P1 | A7ii | 505 | 550 | 610 | 545 | 495 |
| P1 | A7iii | 520 | 600 | 580 | 550 | 475 |
| P1 | A7iv | 510(SL) | 540(A) | 580(A) | 520(A) | 500 |

Table 10

| Primer | Adhesive | Peel test reading after | | | | |
|--------|----------|----------|--------|--------|--------|---------|
| | | 1 minute | 1 hour | 1 day | 1 week | 1 month |
| P1 | A8i | 405 | 435 | 305 | 290 | 355 |
| P1 | A8ii | 420 | 325 | 265 | 280 | 315 |
| P1 | A8iii | 480 | 410 | 315 | 280 | 440 |

Table 11

| Primer | Adhesive | Peel test reading after | | | |
|--------|----------|--------|--------|--------|---------|
| | | 1 hour | 1 day | 1 week | 1 month |
| P5i | A6ii | 465(SL) | 348 | 340 | 502 |
| P5ii | A6ii | 480(SL) | 378 | 310 | 522 |
| P5iii | A6ii | 455(SL) | 365 | 320 | 440 |
| P5iv | A6ii | 365(L) | 350(L) | 345 | 464 |
| P5v | A6ii | 390(A) | 370(L) | 325(SL) | 455 |
| P1 | A6ii | 315 | 350 | 390 | 500 |

Table 12

| Substrate | Peel test reading after | | | | |
|---|---|---|---|---|---|
| | 10 secs | 1 hour | 1 day | 1 week | 1 month |
| Glass | 170 | 120 | 220 | 293 | 283 |
| LDPE* | 149 | 178 | 204 | 201 | 130 |
| PVC | 463(70) | 338(SL) | 377(12) | 380(A) | 380(L) |
| Stainless steel | 265(L) | 338(L) | 375(SL) | 373(23) | 398(L) |

*LDPE = low density polyethylene

Table 13

| Substrate | Primer | Adhesive | Peel test reading after | | |
|---|---|---|---|---|---|
| | | | 1 hour | 1 day | 1 week |
| Stainless steel | P5ii | A6ii | 263 (L) | 200(SL) | 238(SL) |
| Stainless steel | P7 | A6ii | 238(SL) | 245(SL) | 225(SL) |
| PVC | P5ii | A6ii | 288(A) | 295 | 295 |
| PVC | P7 | A6ii | 280(A) | 315 | 325 |

Table 14

| Substrate | Peel test reading after | | | | |
|---|---|---|---|---|---|
| | 10 secs | 1 hour | 1 day | 1 week | 1 month |
| Glass | 78 | 145 | 183(SL) | 243 | 273 |
| LDPE | 59 | 155 | 213 | 280(SL) | 245 |
| PVC | 330 | 250 | 240 | 268 | 275 |
| Stainless steel | 125 | 270(L) | 358(SL) | 443 | 385(SL) |

**Claims**

1. A peelable pressure sensitive adhesive coated substrate comprising a sheet substrate having on one surface thereof a primer coating firmly bonded to the sheet substrate, which includes a contact cement, and, overlying the primer coating, a coating of a peelable pressure sensitive adhesive including a contact cement, the contact cement(s) serving to firmly bond the primer coating and the adhesive coating together.

2. An adhesive coated substrate as claimed in claim 1 wherein the contact cement in the primer coating and the contact cement in the peelable pressure sensitive adhesive coating are each, independently, a natural rubber, a synthetic cis-polyisoprene, a polychloroprene or an acrylic polymer contact cement.

3. An adhesive coated substrate as claimed in either claim 1 or claim 2 wherein the contact cement in the peelable pressure sensitive adhesive coating is the same as the contact cement in the primer coating.

4. An adhesive coated substrate as claimed in any one of claims 1 to 3 wherein the primer coating comprises a contact cement and a film forming diluent polymer.

5. An adhesive coated substrate as claimed in claim 4 wherein the film forming diluent polymer is a styrene butadiene rubber.

6. An adhesive coated substrate as claimed in claim 5 wherein the styrene butadiene rubber contains at least 50% of butadiene by weight.

7. An adhesive coated substrate as claimed in claim 6 wherein the styrene butadiene rubber contains from 50 to 80% of butadiene by weight.

8. An adhesive coated substrate as claimed in any one of claims 1 to 7 wherein the primer coating includes an antioxidant for the contact cement.

9. An adhesive coated substrate as claimed in any one of claims 1 to 8 wherein the primer coating has a coatweight of from 5 to 10 g m$^{-2}$.

10. An adhesive coated substrate as claimed in any one of claims 1 to 9 wherein the peelable pressure sensitive adhesive is based on one or more acrylic polymers, styrene butadiene rubbers and/or isoprene polymers.

11. An adhesive coated substrate as claimed in any one of claims 1 to 10 wherein the proportion of contact cement in the peelable pressure sensitive adhesive is from 10 to 20% by weight of the solid adhesive.

12. An adhesive coated substrate as claimed in any one of claims 1 to 11 wherein the peelable pressure sensitive adhesive coating has a coatweight of from 10 to 25 g m$^{-2}$.

13. An adhesive coated substrate as claimed in any one of claims 1 to 12 wherein the substrate is of paper.

14. An adhesive coated substrate as claimed in any one of claims 1 to 13 in the form of a label.

15. A label as claimed in claim 14 peelably adhered to a target substrate.

16. A peelable pressure sensitive adhesive coated label comprising a backing substrate having a release surface and releasably laminated thereto the pressure sensitive adhesive coated side of a peelable pressure sensitive adhesive label which comprises a flexible sheet label substrate and on one side thereof a primer coating fimly bonded to the sheet substrate, which includes a contact cement and overlying the primer coating a coating of a peelable pressure sensitive adhesive including a contact cement, the contact cement serving to firmly bond the primer coating and the adhesive coating together.

17. A method of making a peelable pressure sensitive adhesive coated sheet product which method comprises coating a substrate with a first aqueous coating mix including dispersed therein a contact cement, removing water from the coating so as to provide a primer coat on the substrate and subsequently coating the primed substrate with a peelable pressure sensitive adhesive composition including a contact cement.

18. A method of making a peelable pressure sensitive adhesive coated label laminated to the release surface of a backing substrate which comprises applying a first aqueous coating mix having dispersed therein a contact cement material to one side of the label substrate, removing water from the coating so as to form a primer coating on the label substrate, coating the release surface of the backing substrate with an aqueous coating mix comprising a dispersion of a peelable pressure sensitive adhesive including therein a contact cement, removing water from the coating on the backing substrate so as to form a coating of a peelable pressure sensitive adhesive on the backing substrate and subsequently laminating the primer coating face of the label substrate to the adhesive coated face of the backing substrate.